# EUROPÄISCHE PATENTSCHRIFT

(11) **EP 1 046 927 B1**
(45) Veröffentlichungstag und Bekanntmachung des Hinweises auf die Patenterteilung: **08.09.2004**
(21) Anmeldenummer: 00108003.5
(22) Anmeldetag: 19.04.2000
(51) Int. Cl.: G01S 13/87, G01S 7/03, G01S 7/28, G01S 13/92

(54) **Verkehrsüberwachungs-Anlage zur Messung der Geschwindigkeit eines vorbeifahrenden Fahrzeugs mittels eines Radargerätes**
Traffic Monitoring apparatus for measuring the speed of a passing vehicle by means of a radar device
Appareil de surveillance du traffic pour mesurer la vitesse d'un véhicule passant en utilisant un dispositif de Radar

(30) Priorität: 21.04.1999 DE 19917970
(43) Veröffentlichungstag der Anmeldung: 25.10.2000
(73) Patentinhaber: ROBOT FOTO UND ELECTRONIC GmbH, D-40597 Düsseldorf (DE)
(72) Erfinder: Luenne, Peter, 30890 Barsinghausen (DE); Kuester, Hans-Holger, 31061 Alfeld (DE)
(74) Vertreter: Weisse, Jürgen, Dipl.-Phys.

(56) Entgegenhaltungen:
- US-A- 5 248 975
- US-A- 5 262 783

## Beschreibung

Die Erfindung betrifft eine Verkehrsüberwachutigs-Anlage, bei welcher die Geschwindigkeit eines vorbeifahrenden Fahrzeugs mittels eines Radargerätes unter Ausnutzung des Dopplereffektes gemessen wird, mit Radar-Antennenmitteln, zugehörigen HF-Elektronikmitteln und Signalverarbeitungsmitteln zur Bildung von Geschwindigkeitsmeßwerten aus Signalen der Radar-Antennenmittel.

### Stand der Technik

Bei einer solchen Verkehrsüberwachungs-Anlage wird mittels eine Radarmeßgerätes ein Meßwert für die Geschwindigkeit eines erfaßten Fahrzeugs unter Ausnutzung des Dopplereffekes, gewonnen. Bei Überschreitung einer zulässigen Höchstgeschwindigkeit wird die Geschwindigkeit registriert und das Fahrzeug photographiert.

Eine Radar-Antenne hat jeweils eine bestimmte Antennen-Charakteristik. Die Radar-Antenne strahlt in einen bestimmten Raumwinkel. Trägt man die ausgesandte Radar-Strahlung als Funktion der Richtung auf, so erhält man als Darstellung eine "Radar-Keule". Der Raumwinkel und die Form der Radar-Keule hängen von der Konstruktion der Radar-Antenne ab. Es gibt Radar-Antennen, beispielsweise Parabol-Antennen, die einen recht scharf gebündelten Radarstrahl aussenden. Dann ist der Raumwinkel klein und die Radar-Keule schmal um eine Mittelachse konzentriert. Solche Radar-Antennen werden üblicherweise bei Verkehrsüberwachungs-Anlagen verwendet.

Durch die US 5,248,975 A ist eine Radaranlage zur Untersuchung von Strukturen im Erdreich bekannt, bei welcher wahlweise eine von mehreren Radar-Antennen unterschiedlichen Typs zur Anpassung an verschiedene Untersuchungsaufgaben einschaltbar ist. Es wird dort sichergestellt, daß jeweils nur eine dieser Radar-Antennen eingeschaltet werden kann.

Die US 5,262,783 A beschreibt ein Radargerät zum Erkennen einer sich bewegenden Person anhand der Dopplerverschiebung. Das Gerät enthält eine Leiterplatte mit einer Mikrowellenschaltung und eine Antennen-Leiterplatte mit parallelgeschalteten Sende- und Empfangs-Antennenflächen, die eine sog. Planar-Antenne bilden. Durch Bildung zweier um 90° phasenverschobener Kanäle kann durch Phasenvergleich die Richtung der Bewegung erkannt werden. Durch Austausch der Antennen-Leiterplatte kann die Form der Radarkeule verändert werden. Allerdings wird dabei naturgemäß nur eine Planar-Antenne durch eine andere ersetzt.

Es gibt Radar-Antennen, z.B. Schlitzantennen oder Planar-Antennen, die einen stark divergenten Radarstrahl aussenden. Der erfaßte Raumwinkel ist dann sehr groß.

Der Erfindung liegt die Aufgabe zu Grunde, den Informationsgehalt der Signale von Radarsensoren oder -meßgeräten bei Verkehrsüberwachungs-Anlagen der eingangs genannten Art bei verschiedenen Meßbedingungen zu verbessern.

Erfindungsgemäß wird diese Aufgabe dadurch gelöst, daß die Radar-Antennenmittel zur Messung der Geschwindigkeit eines Fahrzeugs eine Mehrzahl von Radar-Antennen umfassen, von denen wenigstens eine erste einen scharf gebündelten Richtstrahl mit kleinem Raumwinkel und wenigstens eine zweite einen fächerartigen, stark divergierenden Radarstrahl aussendet.

Radar-Antennen mit scharf gebündeltem Radarstrahl gestatten Messungen an wohldefinierten Stellen, also z.B. an einer bestimmten Stelle einer Straße, an welcher der gebündelte Strahl die Fahrbahn trifft. Es kann dann bei Verkehrsüberwachungs-Anlagen mit Sicherheit ein bestimmtes, photographiertes Fahrzeug erfaßt und vermessen werden unter weitgehendem Ausschluß anderer, in der Nähe befindlicher Fahrzeuge. Solche Radarantennen wie die Parabolantennen erfordern eine sehr genaue Ausrichtung auch in der Höhe, so daß z.B. bei einer Verkehrsüberwachungs-Anlage ein erfaßtes Fahrzeug tatsächlich von dem Radarstrahl erfaßt wird und nicht unter dem Radarstrahl hindurchfährt.

Die Radar-Antennen mit stark divergierendem Radarstrahl gestatten z.B. die Überwachung eines größeren Geländebereiches. Schlitzantennen erzeugen eine Radarkeule, deren Öffnungswinkel in einer Ebene wesentlich größer ist als in der dazu senkrechten Ebene. Ähnlich verhalten sich Planar-Antennen. Durch eine solche Schlitzantenne kann dann beispielsweise bei Anordnung der Verkehrsüberwachungs-Anlage am Straßenrand eine Art "Radarvorhang" quer über die Straße erzeugt werden, wenn die Ebene mit größerem Öffnungswinkel senkrecht verläuft. Dann sind die Anforderungen an die Justage der Radarantenne wesentlich geringer. Ein durch diesen Radarvorhang fahrendes Fahrzeug wird auf jeden Fall erfaßt.

Die beiden Radar-Antennen können in der Weise eingesetzt werden, daß die verschiedenen Radar-Antennen austauschbar mit einer die Signalverarbeitungsmittel enthaltenden Einheit zusammenschaltbar sind. Im Gegensatz zu den bekannten Verkehrsüberwachungs-Anlagen bilden dabei Antenne und Signalverarneitungsmittel nicht eine untrennbare Baugruppe. Es ist vielmehr eine die Signalverarbeitungsmittel enthaltende, gesonderte Baugruppe vorgesehen, an die je nach den Anforderungen der jeweiligen Meßstelle wahlweise eine Radar-Antenne mit Richtcharakteristik oder eine Radar-Antenne mit Fächercharakteristik anschließbar ist.

Eine andere Möglichkeit besteht darin, daß die unterschiedlichen Radar-Antennen gleichzeltig mit einer die Signalverarbeitungsmittel enthaltenden Einheit zusammengeschaltet sind, die Signalverarbeitungsmittel Mittel zur Bildung von je einem Geschwindigkeitmeßwert des erfaßten Fahrzeugs aus den verschiedenen Signalen der verschiedenen Radar-Antennen enthalten und die Signalverarbeitungsmittel weiterhin Mittel zur Bewertung oder Auswahl eines Geschwindigkeitsmeßwertes aus den so für die verschiedenen Radar-Antennen gewonnenen Geschwindigkeitsmeßwerten aufweisen.

Es werden dann aus den Signalen beider Radar-Antennen Geschwindigkeitsmeßwerte des erfaßten Fahrzeugs gebildet. Es erfolgt dann eine Bewertung oder Auswahl der erhaltenen Geschwindigkeitsmeßwerte hinsichtlich ihrer Brauchbarkeit.

Ausführungsbeispiele sind nachstehend unter Bezugnahme auf die zugehörigen Zeichnungen näher erläutert.
- Fig.1: ist eine schematische Darstellung eines Radarmeßgerätes einer Verkehrsüberwachungs-Anlage, welches wahlweise mit unterschiedlichen Radar-Antennen arbeitet.
- Fig.2: ist eine schematische Darstellung einer eines Radarmeßgerätes einer Verkehrsüberwachungs-Anlage, welches gleichzeitig mit Radar-Antennen von unterschiedlicher Charakteristik arbeitet.
- Fig.3: ist eine schematische Darstellung einer Parabolantenne und des zugehörigen Öffnungskegels.
- Fig.4: ist eine schematische Darstellung einer Schlitzantenne mit den zugehörigen Öffnungswinkeln des Radarstrahls.

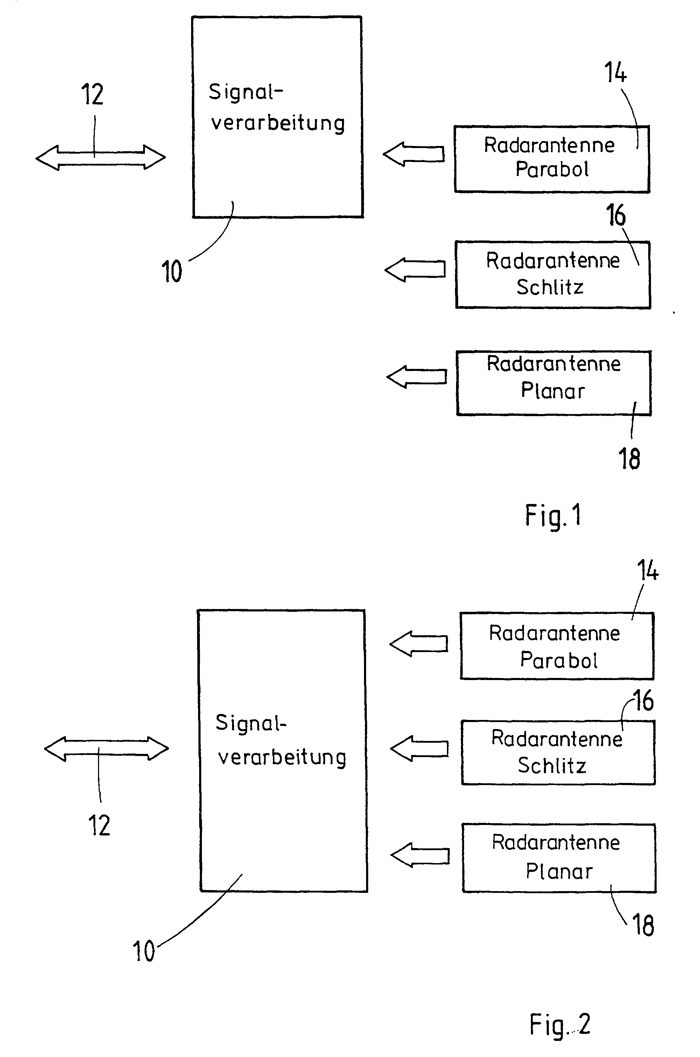

In Fig.1 ist mit 10 eine Einheit bezeichnet, die vor allem die Signalverarbeitung der Radarsignale vornimmt. Die Einheit 10 enthält weiterhin eine Energieversorgung sowie eine Schnittstelle 12. Mit der Einheit 10 ist eine Radar-Antenne verbunden, die in Fig. 1 eine Parabol-Antenne 14 ist. Diese Parabol-Antenne 14 erzeugt einen relativ scharf gebündelten Radarstrahl. Diese Parabol-Antenne 14 ist geeignet für Messungen oder Bewegungsdetektion an eng begrenzten Stellen, die u.U. in größerer Entfernung von der Radar-Antenne 14 liegen können. Damit können z.B. Bewegungen in einem relativ engen Durchgang oder ein Geländebereich in größerer Entfernung überwacht werden. Bei einem Radarmeßgerät kann die Geschwindigkeit eines einzelnen Fahrzeugs weitgehend ungestört durch andere Fahrzeuge an einer bestimmten Stelle einer Straße gemessen werden. Diese Parabol-Antenne 14 kann auch für Messungen in größerer Entfernung, z.B. auf einer Gegenfahrbahn eingesetzt werden.

Statt der Parabol-Antenne 14 können als Radar-Antenne wahlweise auch eine Schlitz-Antenne 16 oder eine Planar-Antenne 18 an die Einheit 10 angesetzt und mit dieser verbunden werden. Die Schlitz-Antenne 16 oder die Planar-Antenne 18 erzeugt eine relativ flache, fächerartige Radar-Keule. Durch Austausch der Radar-Antennen 14, 16 und 18 ist eine Anpassung an die jeweiligen Anforderungen und Umgebungs-Verhältnisse möglich.

Die Radar-Antennen 14, 16 und 18 enthalten jeweils die zugehörigen HF-Elektronikmittel.

Fig.2 zeigt eine Anordnung, bei welcher an einer Einheit 10 gleichzeitig mehrere unterschiedliche Radar-Antennen, nämlich hier die drei Radar-Antennen 14, 16 und 18 angeschlossen sind. Entsprechende Teile sind in Fig.1 und Fig.2 mit den gleichen Bezugszeichen versehen. Die Einheit 10 erhält dadurch drei Radar-Signale, die von der Signalverarbeitung jeweils z.B. zur Bildung von Geschwindindigkeits-Meßwerten verarbeitet werden können. Dadurch ergeben sich zusätzliche Informationen. Insgesamt wird der Informationsgehalt der von dem Radargerät gelieferten Information erhöht. Die Signalverarbeitung nimmt eine Bewertung oder Auswahl der Einzelsignale von den Radar-Antennen 14, 16 und 18 vor. Bei einem Radarsensor für die Bewegungsdetektion kann z.B. die Parabol-Antenne 14 eine Bewegung an einer entfernten, begrenzten Stelle erkennen, die von der Planar-Antenne 18 nicht wahrgenommen würde. Andererseits gestattet die Planar-Antenne 18 das Erkennen von Bewegungen in größerer Nähe aber außerhalb des gebündelten Radarstrahls der Parabol-Antenne 14.

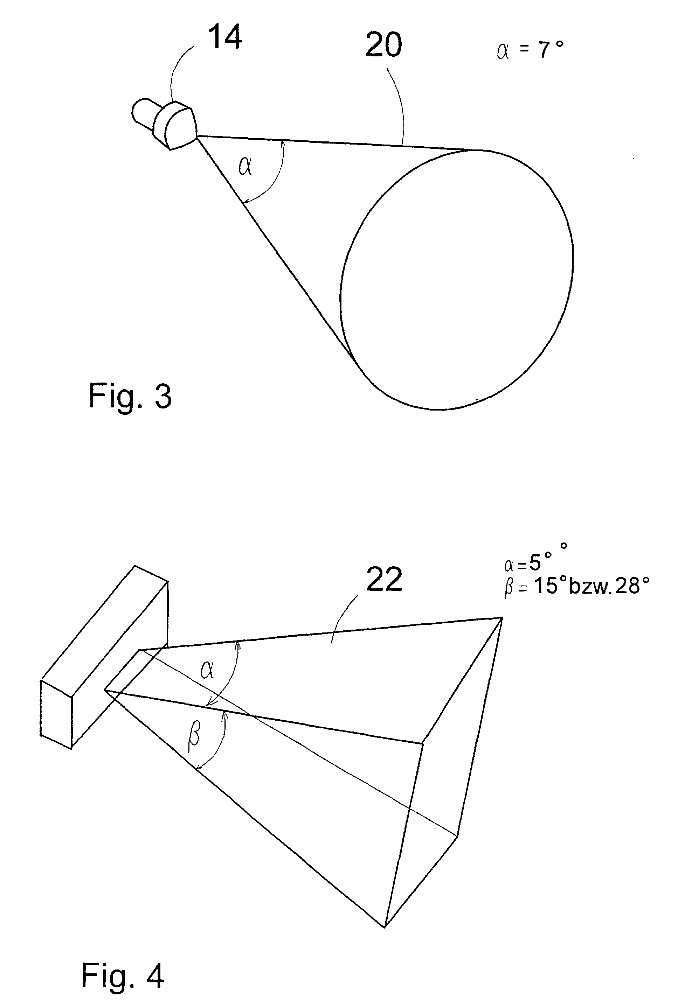

Fig.3 ist eine schematisch-perspektivische Darstellung und zeigt eine Parabel-Antenne 14 mit einem Öffnungskegel 20,der einen Öffnungswinkel α von 7° aufweist. Das ist in Fig.3 nicht maßstäblich dargestellt.

Fig.4 zeigt in schematisch-perspektivischer Darstellung eine Schlitz-Antenne 16. Die Schlitzantenne sendet einen Radarstrahl 22 aus. Der Radarstrahl hat in vertikaler Richtung einen Öffnungswinkel β von 15° oder 20°. In horizontaler Richtung ist der Öffnungswinkel α= 5°. Die Schlitzantenne 16 liefert daher einen flachen, fächerförmigen Radarstrahl.

## Patentansprüche

1. Verkehrsüberwachungs-Anlage mit Radar-Antennenmitteln, zugehörigen HF-Elektronikmitteln und Signalverarbeitungsmittelnzur Bildung von Geschwindigkeitsmeßwerten aus Signalen der Radar-Antennenmittel, **dadurch gekennzeichnet, daß** die Geschwindigkeit eines vorbeifahrenden Fahrzeugs unter Ausnutzung des Dopplereffektes gemessen wird, die Radar-Antennenmittelzur Messung der Geschwindigkeit eines Fahrzeugs eine Mehrzahl von Radar-Antennen (14,16,18) umfassen, von denen wenigstens eine erste einen scharf gebündelten Richtstrahl mit kleinem Raumwinkel und wenigstens eine zweite einen fächerartige, stark divergierenden Radarstrahl aussendet.

2. Verkehrsüberwachungs-Anlage nach Anspruch 1, **dadurch gekennzeichnet, daß** die verschiedenen Radar-Antennen (14,16,18) austauschbar mit einer die Signalverarbeitungsmittel enthaltenden Einheit (10) zusammenschaltbar sind.

3. Verkehrsüberwachungs-Anlage nach Anspruch 1, **dadurch gekennzeichnet, daß**
(a) die unterschiedlichen Radar-Antennen (14,16,18) gleichzeitig mit einer die Signalverarbeitungsmittel enthaltenden Einheit (10) zusammengeschaltet sind,
(b) die Signalverarbeitungsmittel Mittel (26) zur Bildung von je einem Geschwindigkeitmeßwert (v1,v2,v3) des erfaßten Fahrzeugs aus den verschiedenen Signalen der verschiedenen Radar-Antennen (14,16,18) enthalten und
(c) die Signalverarbeitungsmittel weiterhin Mittelt (26) zur Bewertung oder Auswahl eines Geschwindigkeitsmeßwertes aus den so für die verschiedenen Radar-Antennen (14,16,18) gewonnenen Geschwindigkeitsmeßwerten aufweisen.

4. Verkehrsüberwachungs-Anlage nach einem der Ansprüche 1 bis 3, **dadurch gekennzeichnet, daß** die einen scharf gebündelten Richtstrahl erzeugende Antenne eine Parabolantenne ist.

5. Verkehrsüberwachungs-Anlage nach einem. der Ansprüche 1 bis 3, **dadurch gekennzeichnet, daß** die einenfächerartigen, stark divergierenden Radarstrahl aussendende Radar-Antenne eine Schlitzantenne ist

## Claims

1. Traffic monitoring installation with radar antenna means, associated RF electronic means and signal processing means for providing speed measured values from signals of the radar antenna means, **characterised in that** the speed of a passing vehicle is measured making use of the Doppler effect, the radar antenna means for measuring the speed of a vehicle comprise a plurality of radar antennas (14,16,18), of which at least a first one emits a sharply focused directive beam with small solid angle, and at least a second one emits a fan-like, heavily divergent radar beam.

2. Traffic monitoring installation according to claim 1, **characterised in that** the various radar antennas (14,16,18) are adapted to be connected interchangeably with one unit containing the signal processing means.

3. Traffic monitoring device according to claim 1, **characterised in that**
(a) the different radar antennas (14,16,18) are connected simultaneously to a unit (10) containing the signal processing means,
(b) the signal processing means comprise means (26) for providing respective speed measured values (v1,v2,v3) of the observed vehicle from each of the different signals of the various radar antennas (14,16,18) and
(c) the signal processing means, furthermore, comprise means (26) for the evaluation or selection of a speed measured value from the speed measured values thus gained from the various radar antennas (14,16,18).

4. Traffic monitoring installation according to anyone of the claims 1 to 3, **characterised in that** the antenna providing a sharply focused directive beam is a parabolic antenna.

5. Traffic monitoring installation according to anyone of the claims 1 to 3, **characterised in that** the radar antenna emitting a fan-like divergent radar beam is a slot antenna.

## Revendications

1. Dispositif de contrôle de la circulation muni de moyens d'antenne radar, des moyens électroniques HF et des moyens de traitement de signaux associés destinés à établir des valeurs de mesure de la vitesse à partir de signaux des moyens d'antenne radar, **caractérisé en ce que** la vitesse d'un véhicule passant devant le dispositif est mesurée en utilisant l'effet Doppler, les moyens d'antenne radar destinés à mesurer la vitesse d'un véhicule comprennent plusieurs antennes radar (14,16,18) dont au moins l'une émet un étroit faisceau dirigé présentant un petit angle solide, et dont au moins la seconde émet un rayonnement radar à forte divergence en forme d'éventail.

2. Dispositif de contrôle de la circulation selon la revendication 1, **caractérisé en ce que** les différentes antennes radar (14,16,18) peuvent être connectées, de façon interchangeable, à une unité (10) comprenant les moyens de traitement de signaux.

3. Dispositif de contrôle de la circulation selon la revendication 1, **caractérisé en ce que**
(a) les différentes antennes radar (14,16,18) sont connectées simultanément à une unité (10) comprenant les moyens de traitement de signaux,
(b) les moyens de traitement de signaux comprennent des moyens (26) destinés à établir à chaque fois une valeur de mesure de la vitesse (v1,v2,v3) du véhicule détecté à partir des différents signaux des différentes antennes radar (14,16,18) et
(c) les moyens de traitement de' signaux présentent en outre des moyens (26) destinés à évaluer ou sélectionner une valeur de mesure de la vitesse à partir des valeurs de mesure de la vitesse ainsi obtenues pour les différentes antennes radar (14, 16, 18).

4. Dispositif de contrôle de.la circulation selon l'une quelconque des revendications 1 à 3, **caractérisé en ce que** l'antenne produisant l'étroit faisceau dirigé est une antenne parabolique.

5. Dispositif de contrôle de la circulation selon l'une quelconque des revendications 1 à 3, **caractérisé en ce que** l'antenne radar émettant un rayonnement radar à forte divergence en forme d'éventail est une antenne à fente.
